# EUROPEAN PATENT APPLICATION

(11) **EP 4 465 437 A1**
(43) Date of publication of application: **20.11.2024**
(21) Application number: 24171580.4
(22) Date of filing: 22.04.2024
(51) Int. Cl.: H01M 50/627, H01M 50/103, H01M 50/15, H01M 50/184, H01M 50/586, H01M 50/593

(54) **ELECTRICITY STORAGE DEVICE**

(30) Priority: 18.05.2023 JP 2023082114
(71) Applicant: Prime Planet Energy & Solutions, Inc., Chuo-ku Tokyo 103-0022 (JP)
(72) Inventor: SAKAKIBARA, Tetsuya, Tokyo, 103-0022 (JP)
(74) Representative: Kuhnen & Wacker Patent- und Rechtsanwaltsbüro PartG mbB

(57) **Abstract**

A technology of suppressing adhesion of an electrolyte solution to a portion near a liquid injection hole on an inner surface of a sealing plate is provided. An electricity storage device 1 includes an electrode body 20, an electrolyte solution, and a case 10 that houses the electrode body 20 and the electrolyte solution. The case 10 includes a body 12 that includes an opening 12h and a rectangular sealing plate 14 that seals the opening 12h. The sealing plate 14 includes a liquid injection hole 17 through which the electrolyte solution is injected at a side closer to a first short side portion14c than a straight line CL passing through a middle point M1 of a first long side portion14a and a middle point M2 of a second long side portion14b. Herein, the sealing plate 14 includes a pair of protrusions 90 that protrude from an inner surface 142 inwardly of the case 10. The pair of protrusions 90 are provided in portions of the inner surface 142 symmetrical with respect to the liquid injection hole 17 in a long side direction of the sealing plate 14.

## Description

### BACKGROUND OF THE DISCLOSURE

### 1. Field

The present disclosure relates to an electricity storage device.

### 2. Background

An electricity storage device disclosed in Japanese Laid-open Patent Publication No. 2016-76346 includes a housing body in which a liquid injection hole through which an electrolyte solution is injected is provided in a partition wall, an electrode body housed in the housing body, and a plug member that seals the liquid injection hole and includes a head portion that is larger than an inner diameter of the liquid injection hole and a shaft portion that is inserted in the liquid injection hole. In this electricity storage device, a first recessed portion surrounding the liquid injection hole or a raised portion surrounding the liquid injection hole is formed in an inner surface of the partition wall. In Japanese Laid-open Patent Publication No. 2016-76346, it is described that, with the configuration described above, an amount of an electrolyte solution that adheres to the inner surface of the partition wall and passes between the shaft portion of the plug portion and an inner circumferential surface of the liquid injection hole to move outside can be reduced.

In Japanese Laid-open Patent Publication No. 2013-191450, a method for manufacturing a rectangular secondary battery including a battery can that houses an electrode group, a battery lid that closes an opening of the battery can, a liquid injection port including a recess formed to be recessed in a surface of the battery lid and a through hole that is opened at a bottom surface of the recess and penetrates the battery lid, and a sealing plug that, after an electrolyte solution is injected into the battery can from the liquid injection port, is fitted into the recess and is welded to the battery lid in a state of being in contact with a bottom surface of the recess to seal the liquid injection port is disclosed. The manufacturing method includes an injection step of attaching a nozzle head that injects the electrolytic solution to the liquid injection port, bringing a head body of the nozzle head that is made of an elastic material into contact with the bottom surface of the recess, connecting the head body to the through hole in a sealed state, and injecting the electrolyte solution into the battery can. In Japanese Laid-open Patent Publication No. 2013-191450, it is described that, with the configuration described above, in injecting the electrolyte solution into the battery can, adhesion of the electrolyte solution into the recess of the liquid injection port can be prevented and welding failure that is caused by adhesion of the electrolyte solution in sealing the liquid injection port can be eliminated.

### SUMMARY

Incidentally, an inventor of the present application desires to suppress adhesion of an electrolyte solution to a liquid injection hole on an inner surface of a sealing plate.

An electricity storage device disclosed herein includes an electrode body, an electrolyte solution, a case that houses the electrode and the electrolyte solution. The case includes a body including a rectangular bottom surface, an opening opposed to the bottom surface, a pair of broad width surfaces that are opposed to each other and each of which extends from a corresponding one of a pair of long sides of the bottom surface that are opposed to each other, and a pair of narrow width surfaces that are opposed to each other and each of which extends from a corresponding one of a pair of short sides of the bottom surface that are opposed to each other, and a rectangular sealing plate that seals the opening.

The sealing plate includes a first long side portion and a second long side portion opposed to each other, and a first short side portion and a second short side portion opposed to each other. The sealing plate includes a liquid injection hole through which the electrolyte solution is injected at a side closer to the first short side portion than a straight line passing through a middle point of the first long side portion and a middle point of the second long side portion. Herein, the sealing plate includes a pair of protrusions that protrude from an inner surface thereof opposed to the bottom surface inwardly of the case. The pair of protrusions are provided in portions of the inner surface symmetrical with respect to the liquid injection hole in a long side direction of the sealing plate. According to the electricity storage device having the configuration described above, adhesion of the electrolyte solution to the liquid injection hole can be suppressed on the inner surface of the sealing plate.

### BRIEF DESCRIPTION OF THE DRAWINGS

FIG. 1 is a cross-sectional view of an electricity storage device.
FIG. 2 is a partial enlarged view of FIG. 1.
FIG. 3 is a plan view of a sealing plate.
FIG. 4 is a schematic view of an electrode body.
FIG. 5 is a partial enlarged view of an electricity storage device.

### DETAILED DESCRIPTION OF THE PREFERRED EMBODIMENTS

Preferred embodiments of a technology disclosed herein will be described below. The preferred embodiments described herein are not intended to be particularly limiting the technology disclosed herein. The technology disclosed herein is not limited to the preferred embodiments described herein, unless specifically stated otherwise. The accompanying drawings are schematic and do not necessarily reflect actual members or portions. Members/portions that have the same effect will be denoted by the same sign as appropriate and the overlapping description will be omitted as appropriate. Reference signs "R," "L," "U," "D," "F," and "Rr" in the drawings respectively denote "right," "left," "up," "down," "front," and "rear." The notation "A to B" that indicates a numerical range means "A or more and B or less" and also encompasses "more than A and less than B," unless specifically stated otherwise.

As used in this specification, the term "electricity storage device" refers to devices in which charge carriers move between a pair of electrodes (a positive electrode and a negative electrode) via an electrolyte and thus a charging and discharging reaction occurs. Such electricity storage devices include secondary batteries, such as a lithium-ion secondary battery, a nickel hydrogen battery, a nickel cadmium battery, or the like and capacitors, such as a lithium-ion capacitor, an electric double-layered capacitor, or the like. Preferred embodiments in which, as an example of the electricity storage devices described above, a lithium-ion secondary battery is a target will be described below.

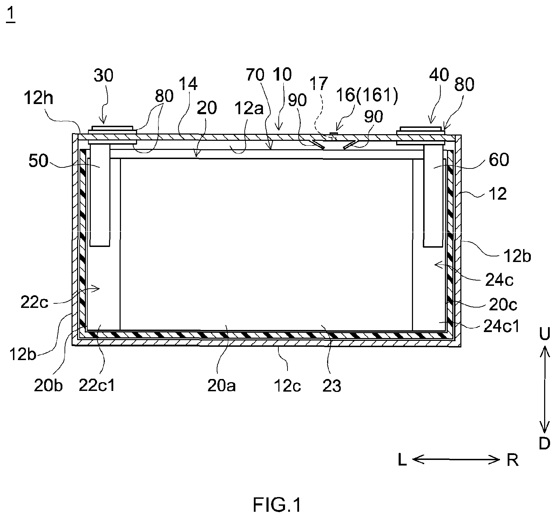

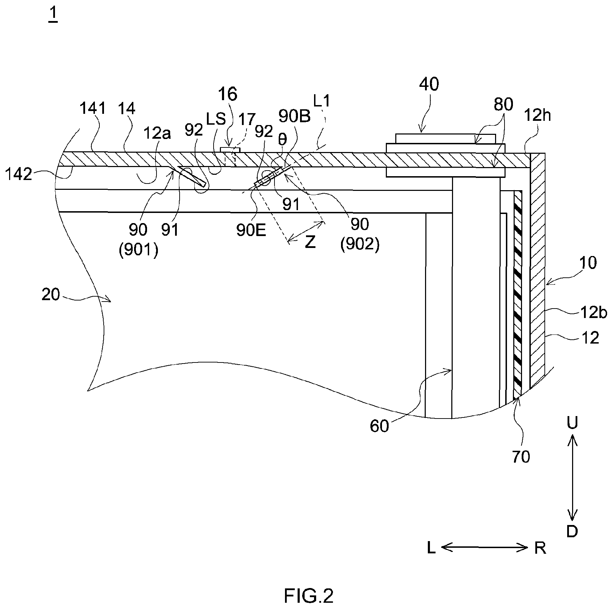

FIG. 1 is a cross-sectional view of an electricity storage device 1. In FIG. 1, a cross-sectional structure of the electricity storage device 1 along a broad width surface 12a is illustrated. FIG. 2 is a partial enlarged view of FIG. 1. In FIG. 2, a cross-sectional structure near a liquid injection hole 17 in FIG. 1 is partially enlarged and illustrated. As illustrated in FIG. 1, the electricity storage device 1 includes a case 10, an electrode body 20, a positive electrode terminal 30, a negative electrode terminal 40, a current collecting member 50 at the positive electrode side, a current collecting member 60 at a negative electrode side, an insulating film 70, an insulating member 80, and an unillustrated electrolyte solution.

The case 10 is, for example, a member that houses the electrode body 20 and the electrolyte solution. In terms of reducing a weight and ensuring desired stiffness, for example, the case 10 may be formed of aluminum or an aluminum alloy, but not particularly limited to.

As illustrated in FIG. 1 to FIG. 2, the case 10 includes a body 12 and a sealing plate 14. The body 12 is a body of the case 10 that houses, for example, the electrode body 20 therein. In this preferred embodiment, the body 12 includes an opening 12h, a pair of broad width surfaces 12a opposed to each other, a pair of narrow width surfaces 12b opposed to each other, and a bottom surface 12c. The bottom surface 12c is opposed to the opening 12h herein. The bottom surface 12c has a rectangular shape herein and has a pair of long sides opposed to each other and a pair of short sides opposed to each other. The pair of broad width surfaces 12a opposed to each other are surfaces each of which extends from a corresponding one of the pair of long sides of the bottom surface 12c opposed to each other. The pair of narrow width surfaces 12b opposed to each other are surfaces each of which extends from a corresponding one of the pair of short sides of the bottom surface 12c opposed to each other. Note that, in this specification, the description of "rectangular" or "rectangle" encompasses a shape in which a linear long side and a linear short side are joined to each other via a curved line, a shape in which at least one of the long side and the short side is not linear but is curved, uneven, bent and formed of multiple straight or curved lines, or the like.

The opening 12h is, for example, a member to which the sealing plate 14 is mounted. Herein, the opening 12h is formed by upper ends of the pair of broad width surfaces 12a and upper ends of the pair of narrow width surfaces 12b surrounding the opening 12h, and has a rectangular shape. The sealing plate 14 is fitted in the opening 12h and is joined (for example, welded) thereto, so that the body 12 and the sealing plate 14 are integrated and the case 10 is air-tightly sealed.

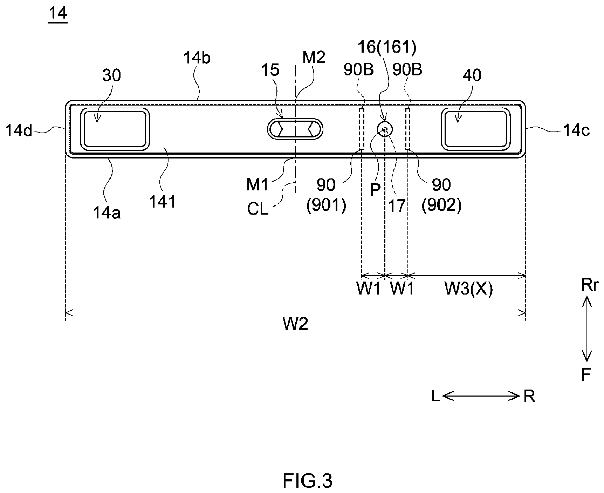

FIG. 3 is a plan view of the sealing plate 14. In FIG. 3, a structure of the sealing plate 14 when viewed from outside of the case 10 is illustrated. The sealing plate 14 is, for example, a flat plate-like member that seals the opening 12h. Therefore, the sealing plate 14 may have a corresponding shape to a shape of the opening 12h. In this preferred embodiment, the sealing plate 14 has a rectangular shape. Herein, when the sealing plate 14 is attached to the opening 12h, the sealing plate 14 is, for example, opposed to the bottom surface 12c. As illustrated in FIG. 3, the sealing plate 14 includes a first long side portion 14a and a second long side portion 14b opposed to each other, and a first short side portion 14c and a second short side portion 14d opposed to each other. In a configuration illustrated in FIG. 3, the first long side portion 14a is a front (F) long side portion of a pair of long side portions opposed to each other. The second long side portion 14b is a rear (Rr) long side portion of the pair of long side portions opposed to each other. The first short side portion 14c is a right (R) short side portion of a pair of short side portions opposed to each other. The second short side portion 14d is a left (L) short side portion of the pair of short side portions opposed to each other.

As illustrated in FIG. 3, the sealing plate 14 includes an unillustrated attachment hole, a discharge valve 15, and a liquid injection hole 17. The attachment hole is, for example, a through hole to which an electrode terminal is attached. Therefore, the sealing plate 14 may include an attachment hole to which the positive electrode terminal 30 is attached and an attachment hole to which the negative electrode terminal 40 is attached separately. A portion of the electrode terminal is inserted through a corresponding one of the attachment holes. The discharge valve 15 is, for example, a thin portion. Herein, the discharge valve 15 is configured to break and discharge gas out of the case 10 when a pressure in the case 10 becomes equal to or more than a predetermined value. The liquid injection hole 17 is a member through which an electrolyte solution is injected. As illustrated in FIG. 1 to FIG. 3, a sealing member 16 is attached to the liquid injection hole 17. In this preferred embodiment, the liquid injection hole 17 is provided closer to the first short side portion 14c (at right in FIG. 3) than a straight line CL passing through a middle point M1 of the first long side portion 14a and a middle point M2 of the second long side portion 14b.

The sealing member 16 may be, for example, formed of metal. In the configuration illustrated in FIG. 3, the sealing member 16 includes a flange portion 161 and an insertion portion 162. The flange portion 161 is a plate-like member that is arranged on the sealing plate 14 and is welded to the sealing plate 14. The insertion portion 162 is a member that has a shaft-like shape or a protruding shape and is inserted in the liquid injection hole 17. Note that a shape of the sealing member 16 is not limited thereto. In another preferred embodiment, the sealing member 16 may be formed of the flange portion 161.

Incidentally, in welding the sealing member 16 and the sealing plate 14, for example, the sealing member 16 (herein, the flange portion 161) is welded to an outer surface 141 (see FIG. 2 and FIG. 3) of the sealing plate 14. At this time, in the sealing plate 14, for example, a degree of increase in temperature is larger in a portion near the liquid injection hole 17 than in other portions. Therefore, when the electrolyte solution adheres the portion near the liquid injection hole 17, the electrolyte solution can be vaporized because of increase in temperature caused by welding. The inventor of the present application desired to suppress vaporization of the electrolyte solution near the liquid injection hole 17 during welding. The inventor of the present application considered that, on an inner surface 142 (see FIG. 2) of the sealing plate 14, when adhesion of the electrolyte solution to the liquid injection hole 17 is suppressed, vaporization of the electrolyte solution in the corresponding portion can be suppressed in welding, and furthermore, a risk of occurrence of inconvenience (for example, welding failure or the like) due to vaporization of the electrolyte solution can be reduced.

In the configuration illustrated in FIG. 1 to FIG. 3, the sealing plate 14 includes a pair of protrusions 90. The pair of protrusions 90 herein protrude from the inner surface 142 opposed to the bottom surface 12c inwardly of the case 10. A protrusion direction of each of the protrusions 90 can be defined, for example, by a straight line L1 connecting a base end 90B of the protrusion 90 and a tip end 90E of the protrusion 90. The base end 90B of the protrusion 90 is a boundary of the inner surface 142 and the protrusion 90 herein. In this preferred embodiment, the pair of protrusions 90 are provided in portions of the inner surface 142 symmetrical with respect to the liquid injection hole 17 in a long side direction of the sealing plate 14. Herein, the long side direction of the sealing plate 14 is a direction in which the first long side portion 14a extends and, in FIG. 1 and FIG. 3, is a left-right direction. In this specification, the expression "the pair of protrusions 90 are symmetrical with respect to the liquid injection hole 17 in the long side direction of the sealing plate 14" means that the liquid injection hole 17 is interposed between the pair of the protrusions 90 in the long side direction of the sealing plate 14 and a shortest distance from one of the protrusions 90 to the liquid injection hole 17 and a shortest distance from the other one of the protrusions 90 to the liquid injection hole 17 are equal. Note that, for convenience of description, in the following description, the protrusion 90 at left in FIG. 2 and FIG. 3 will be sometimes referred to as a "first protrusion 901" and the protrusion 90 at right in FIG. 2 and FIG. 3 will be sometimes referred to a second protrusion 902.

In the configuration illustrated in FIG. 1 and FIG. 2, each of the protrusions 90 has a plate-like shape. As illustrated in FIG. 2, each of the protrusions 90 includes a first surface 91 and a second surface 92. The first surface 91 is herein a flat surface and is a surface at a side closer to the other one of protrusions 90. As used herein, the expression "the surface at a side closer to the other one of the protrusions 90" may be a surface provided closer to the other one of the protrusions 90 and, depending on a magnitude of an angle θ (see FIG. 2) that will be described later, is not necessarily opposed to the other one of the protrusions 90. As illustrated in FIG. 2, the first surface 91 of the first protrusion 901 is a surface at a side closer to the second protrusion 902. The first surface 91 of the second protrusion 902 is a surface at a side closer to the first protrusion 901. Herein, the second surface 92 is a flat surface and is a surface at an opposite side to the first surface 91. As illustrated in FIG. 2, the second surface 92 of the first protrusion 901 is a surface facing an opposite side to the second protrusion 902. The second surface 92 of the second protrusion 902 is a surface facing an opposite side to the first protrusion 901.

In this preferred embodiment, each of the protrusions 90 is inclined relative to the inner surface 142 of the sealing plate 14. Herein, of angles formed by each of the protrusions 90 and the inner surface 142 of the sealing plate 14, one at a side closer to the other one of the protrusions 90 (an angle located closer to the liquid injection hole 17) is less than 90 degrees. In the configuration illustrated in FIG. 2, the angle θ formed by a line segment LS and the straight line L1 is less than 90 degrees. The line segment LS is herein a line segment connecting the base end 90B of the first protrusion 901 and the base end 90B of the second protrusion 902 at a shortest distance. The angle θ may be, for example, 80 degrees or less, is preferably 70 degrees or less, is more preferably 60 degrees or less, is even more preferably 50 degrees or less, and is particularly preferably 40 degrees or less. The angle θ may be generally 3 degrees or more, is preferably 5 degrees or more, and is more preferably 10 degrees or more.

There is no particular limitation on a shortest distance W1 between the liquid injection hole 17 and each of the protrusions 90 as long as an effect of the technology disclosed herein is achieved. The shortest distance W1 is, for example, a shortest distance between center P of the liquid injection hole 17 and the base end 90B of each of the protrusions 90 (see FIG. 3). When it is assumed that a shortest distance W2 (an outer dimension, see FIG. 3) between the first short side portion 14c and the second short side portion 14d is 1, the shortest distance W1 may be, for example, 0.02 or more, is preferably 0.04 or more, and is more preferably 0.06 or more. When it is assumed that the shortest distance W2 is 1, the shortest distance W1 may be, for example, 0.17 or less, is preferably 0.15 or less, and is more preferably 0.13 or less. In one example, when the shortest distance W2 is 120 mm, the shortest distance W1 is preferably 7 mm to 15 mm. In this case, a shortest distance W3 between the base end 90B of the second protrusion 902 and the first short side portion 14c is preferably 31 mm or more and 39 mm or less.

In this preferred embodiment, each of the protrusions 90 is provided continuously to and integrally with the sealing plate 14. In this case, the protrusions 90 may be formed of a same material as that of the sealing plate 14. The protrusions 90 may be provided in the sealing plate 14 by press work, but not particularly limited to.

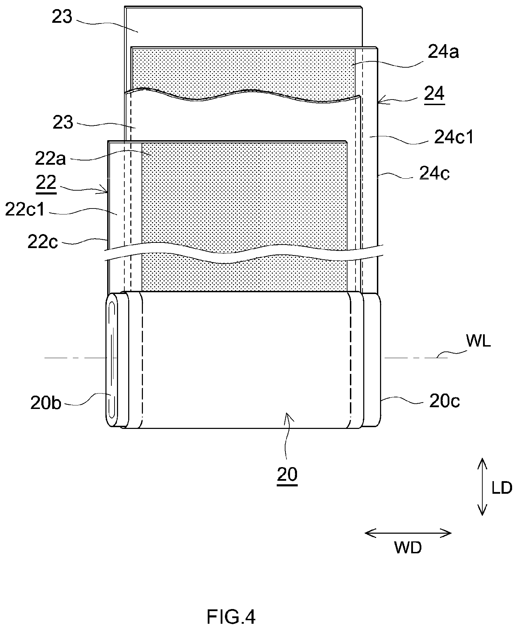

FIG. 4 is a schematic view of the electrode body 20. The electrode body 20 is, for example, an electricity generation element of the electricity storage device 1 that includes a positive electrode and a negative electrode. The electrode body 20 has, for example, a stacked structure in which a sheet-like positive electrode 22 and a sheet-like negative electrode 24 are stacked with a separator 23 interposed therebetween. The electrode body 20 is housed in the case 10 with the sheet-like positive electrode 22 and the sheet-like negative electrode 24 stacked such that a stacking direction of the positive electrode 22 and the negative electrode 24 is a direction toward the pair of broad width surfaces 12a.

As illustrated in FIG. 4, the electrode body 20 is, for example, a wound electrode body formed by stacking the sheet-like positive electrode 22 and the sheet-like negative electrode 24 with the separator 23 interposed therebetween and winding a stacked body in a sheet longitudinal direction LD. The electrode body 20 can be formed, for example, by winding the positive electrode 22, the negative electrode 24, and the separator 23 into a cylindrical body and pressing the cylindrical body. Therefore, the electrode body 20 has a flat shape. The electrode body 20 includes, for example, a pair of flat surfaces 20a opposed to each other (see FIG. 1).

One end surface 20b of the electrode body 20 is opposed to one of the narrow width surfaces 12b (the narrow width surface 12b at left in FIG. 1) and the other end surface 20c is opposed to the other one of the narrow width surfaces 12b (the narrow width surface 12b at right in FIG. 1). The end surface 20b is herein a stacked surface of a non-coated portion 22c1 of a positive electrode current collecting foil 22c, and is an open surface. The end surface 20c is herein a stacked surface of a non-coated portion 24c1 of a negative electrode current collecting foil 24c, and is an open surface. As illustrated in FIG. 1 and FIG. 4, the electrode body 20 is housed in the body 12 such that a winding axis direction WD and a left-right direction of the electricity storage device 1 are substantially in parallel to each other. A winding axis WL of the electrode body 20 is substantially perpendicular to the broad width surfaces 12a and the narrow width surfaces 12b and is substantially in parallel to the sealing plate 14.

As illustrated in FIG. 4, the positive electrode 22 includes a long band-like positive electrode current collecting foil 22c (for example, aluminum foil) and a positive electrode active material layer 22a fixed on at least one surface of the positive electrode current collecting foil 22c. A protective layer (not illustrated) may be provided in one side edge portion of the positive electrode 22 in the winding axis direction WD as necessary, but not particularly limited to. Note that, as a constituent material of the positive electrode active material layer 22a and a constituent material of the protective layer, materials used for electricity storage devices of this type (in this preferred embodiment, a lithium-ion secondary battery) may be used without limitation.

The band-like non-coated portion 22c1 is provided to extend in the longitudinal direction LD in one end (a left end in FIG. 4) of the positive electrode current collecting foil 22c in the winding axis direction WD. The non-coated portion 22c1 is a portion of the positive electrode current collecting foil 22c. The non-coated portion 22c1 is a member to which the positive electrode active material layer 22a is not applied in the positive electrode current collecting foil 22c. In this preferred embodiment, the non-coated portion 22c1 protrudes from the separator 23 in the winding axis direction WD. The non-coated portion 22c1 is stacked at one end (the left end in FIG. 4) in the winding axis direction WD. As illustrated in FIG. 1, the current collecting member 50 is joined to the non-coated portion 22c 1.

As illustrated in FIG. 4, the negative electrode 24 includes the long band-like negative electrode current collecting foil 24c (for example, copper foil) and a negative electrode active material layer 24a fixed on at least one surface of the negative electrode current collecting foil 24c. Note that, as a constituent material of the negative electrode active material layer 24a, materials used for electricity storage devices of this type (in this preferred embodiment, a lithium-ion secondary battery) may be used without limitation.

The band-like non-coated portion 24c1 is provided to extend in the longitudinal direction LD in one end (a right end in FIG. 4) of the negative electrode current collecting foil 24c in the winding axis direction WD. The non-coated portion 24c1 is a portion of the negative electrode current collecting foil 24c. The non-coated portion 24c1 is a member in which the negative electrode active material layer 24a is not formed in the negative electrode current collecting foil 24c. In this preferred embodiment, the non-coated portion 24c1 protrudes from the separator 23 in the winding axis direction WD. For example, the non-coated portion 24c1 is stacked at one end (the right end in FIG. 4) in the winding axis direction WD. As illustrated in FIG. 1, the current collecting member 60 is joined to the non-coated portion 24c1.

The separator 23 is a member that insulates between the positive electrode active material layer 22a of the positive electrode 22 and the negative electrode active material layer 24a of the negative electrode 24. The separator 23 forms an outer surface of the electrode body 20 in this preferred embodiment. As the separator 23, for example, a resin porous sheet made of polyolefin resin such as polyethylene (PE), polypropylene (PP), or the like is used.

The positive electrode terminal 30 is, for example, a member that is electrically connected to the positive electrode 22 of the electrode body 20. As described above, the positive electrode terminal 30 is inserted through the attachment hole provided in the sealing plate 14 and is arranged outside and inside the body 12. Therefore, the positive electrode terminal 30 may include, for example, a portion arranged outside the case 10, a portion inserted through the attachment hole, and a portion arranged inside the case 10. The positive electrode terminal 30 is formed of, for example, aluminum or an aluminum alloy.

The current collecting member 50 at the positive electrode side is, for example, a member that electrically connects the positive electrode 22 and the positive electrode terminal 30 inside the case 10. In the configuration illustrated in FIG. 1, the current collecting member 50 has a plate-like shape and extends from the sealing plate 14 toward the electrode body 20. The current collecting member 50 is herein connected to the positive electrode terminal 30 at one end (an upper end in FIG. 1) and is connected to the electrode body 20 at the other end (a lower end in FIG. 1). In this preferred embodiment, connection of the current collecting member 50 and the positive electrode terminal 30 is achieved by joining (for example, welding) the one end of the current collecting member 50 and the positive electrode terminal 30. In this preferred embodiment, connection of the current collecting member 50 and the electrode body 20 is achieved by joining (for example, welding) the other end of the current collecting member 50 and the non-coated portion 22c1. The current collecting member 50 is formed of, for example, aluminum and an aluminum alloy.

The negative electrode terminal 40 is, for example, a member that is electrically connected to the negative electrode 24 of the electrode body 20. The negative electrode terminal 40 is formed of, for example, copper or a copper alloy. The negative electrode terminal 40 may have, for example, a similar configuration to that of the positive electrode terminal 30. Therefore, description of the configuration of the negative electrode terminal 40 is omitted herein. The current collecting member 60 at the negative electrode side is, for example, a member that electrically connects the negative electrode 24 and the negative electrode terminal 40 inside the case 10. The current collecting member 60 is formed of, for example, copper or a copper alloy. The current collecting member 60 at the negative electrode side may have, for example, a similar configuration to that of the current collecting member 50 at the positive electrode side. Therefore, description of the configuration of the current collecting member 60 is omitted herein.

The insulating film 70 is, for example, a member that covers the electrode body 20. The insulating film 70 has, for example, a bag-like shape and a portion thereof is opened. As illustrated in FIG. 1, the insulating film 70 is closed at a lower end and is opened at an upper end. In this preferred embodiment, the insulating film 70 is housed in the case 10 with the electrode body 20 housed inside the insulating film 70.

As illustrated in FIG. 1 to FIG. 2, the insulating members 80 are provided between the positive electrode terminal 30 and the sealing plate 14 and between the negative electrode terminal 40 and the sealing plate 14. For example, the insulating member 80 is arranged to extend between the positive electrode terminal 30 and the inner surface of the sealing plate 14, and along an inner circumferential surface of the attachment hole. Similarly, at the negative electrode side, for example, the insulating member 80 is arranged to extend between the negative electrode terminal 40 and each of the outer surface of the sealing plate 14, the inner surface of the sealing plate 14, and the attachment hole. The insulating member 80 may be an integrally molded member, and may be a combination of members each of which is separately molded.

The electrolyte solution contains, for example, an electrolyte salt and a nonaqueous solvent. Examples of the electrolyte salt include, for example, LiPF₆ or the like. A concentration of the electrolyte salt in the electrolyte solution is, for example, 0.7 mol/L to 1.3 mol/L. The nonaqueous solvent may be, for example, carbonates. Examples of carbonates include, for example, ethylene carbonate (EC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), or the like. One of the carbonates described above can be individually used or two or more thereof can be combined and used.

The electricity storage device 1 is used for various applications. In particular, the electricity storage device 1 can be preferably used as a power source (a drive power source) for a motor mounted on a vehicle, such as a passenger vehicle, a truck, or the like. There is no particular limitation on a vehicle type. Preferable examples of the vehicle type include, for example, a plug-in hybrid electric vehicle (PHEV), a hybrid electric vehicle (HEV), a battery electric vehicle (BEV), or the like.

As described above, the electricity storage device 1 includes the electrode body 20, the electrolyte solution, and the case 10 that houses the electrode body 20 and the electrolyte solution. The case 10 includes the body 12 that includes the rectangular bottom surface 12c, the opening 12h opposed to the bottom surface 12c, the pair of broad width surfaces 12a that are opposed to each other and each of which extends from a corresponding one of the pair of long sides of the bottom surface 12c that are opposed to each other, and the pair of narrow width surfaces 12b that are opposed to each other and each of which extends from a corresponding one of the pair of short sides of the bottom surface 12c that are opposed to each other, and the rectangular sealing plate 14 that seals the opening 12h. The sealing plate 14 includes the first long side portion 14a and the second long side portion 14b opposed to each other and the first short side portion 14c and the second short side portion 14d opposed to each other. The sealing plate 14 includes the liquid injection hole 17 through which the electrolyte solution is injected at a side closer to the first short side portion 14c than the straight line CL passing through the middle point M1 of the first long side portion 14a and the middle point M2 of the second long side portion 14b.

Herein, the sealing plate 14 includes the pair of protrusions 90 (herein, the first protrusion 901 and the second protrusion 902) that protrude from the inner surface 142 opposed to the bottom surface 12c inwardly of the case 10. The pair of protrusions 90 are provided in portions of the inner surface 142 symmetrical with respect to the liquid injection hole 17 in the long side direction of the sealing plate 14.

In the electricity storage device 1, at the inner surface 142 of the sealing plate 14, the pair of protrusions 90 are provided so as to be symmetrical with respect to the liquid injection hole 17 in the long side direction. In other words, at the inner surface 142 of the sealing plate 14, the liquid injection hole 17 is interposed between the pair of protrusions 90. Therefore, for example, in a manufacturing process of the electricity storage device 1, for the case 10 that houses the electrode body 20 and the electrolyte solution before being sealed, the protrusions 90 can block the electrolyte solution splashed from inner wall surfaces (for example, the narrow width surfaces 12b) of the body 12 when the case 10 moves. Thus, adhesion of the electrolyte solution to a portion near the liquid injection hole 17 can be suppressed on the inner surface 142 of the sealing plate 14. For example, occurrence of inconvenience (for example, welding failure between the sealing member 16 and the sealing plate 14) that can be caused by adhesion of the electrolyte solution to the portion near the liquid injection hole 17 can be suppressed.

Each of the protrusions 90 may include a flat surface (herein, the second surface 92) facing the opposite side to the other one of the protrusions 90. By forming the surface of one of the protrusions 90 at the opposite side to the other one of the protrusions 90 into a flat surface with no recess and protrusion, the electrolyte solution splashed from the inner wall surfaces of the body 12 can be caused to flow inwardly of the case 10 more smoothly. Therefore, an effect of suppressing adhesion of the electrolyte solution to the liquid injection hole 17 on the inner surface 142 of the sealing plate 14 can be enhanced.

Each of the protrusions 90 may have a plate-like shape. Each of the protrusions 90 may include the flat first surface 91 at the side closer to the other one of the protrusions 90 and the flat second surface 92 at the opposite side to the first surface 91. In this case, with the second surface 92 formed into a flat surface, scattering of the electrolyte solution inside the case 10 can be suppressed in injecting the electrolyte solution into the case 10. Thus, the effect of suppressing adhesion of the electrolyte solution to the liquid injection hole 17 on the inner surface 142 of the sealing plate 14 can be further enhanced.

Each of the protrusions 90 may be inclined relative to the inner surface 142 of the sealing plate 14. Of the angles formed by each of the protrusions 90 and the inner surface 142, the angle θ at a side closer to the other one of the protrusions 90 may be less than 90 degrees. Thus, the effect of suppressing adhesion of the electrolyte solution to the liquid injection hole 17 on the inner surface 142 of the sealing plate 14 can be further enhanced.

When it is assumed that the shortest distance W2 between the first short side portion 14c and the second short side portion 14d is 1, the shortest distance W1 from the liquid injection hole 17 to each of the protrusions 90 may be 0.6 or more and 0.13 or less. Thus, the effect of suppressing adhesion of the electrolyte solution to the liquid injection hole 17 on the inner surface 142 of the sealing plate 14 can be further enhanced.

Each of the protrusions 90 may be provided continuously to and integrally with the sealing plate 14. Thus, it is not needed to separately prepare a member used for providing the protrusions 90. Therefore, in addition to the effect of suppressing adhesion of the electrolyte solution to the liquid injection hole 17, easiness for forming the electricity storage device 1 can be increased.

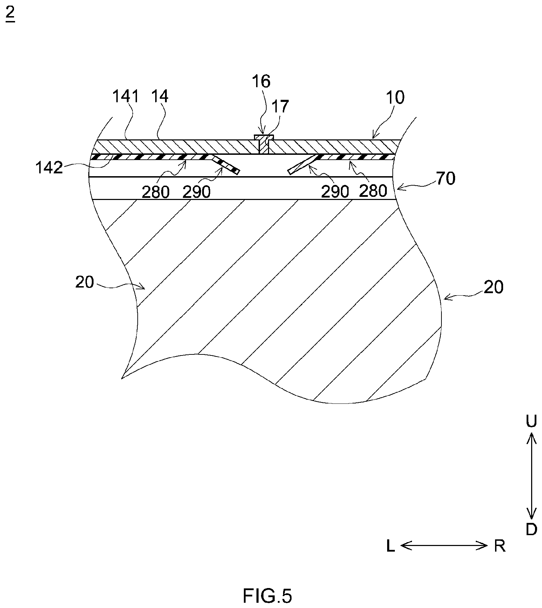

In the preferred embodiment described above, the protrusions 90 are integrally formed with the sealing plate 14. However, the technology disclosed herein is not limited thereto. FIG. 5 is a partial cross-sectional view of an electricity storage device 2. In FIG. 5, a cross-sectional structure of the electricity storage device 2 near the liquid injection hole 17 is partially enlarged and illustrated. As illustrated in FIG. 5, in the electricity storage device 2, the sealing plate 14 includes a pair of protrusions 290 that protrude from the inner surface 142 inwardly of the case 10. The pair of the protrusions 290 are provided in portions of the inner surface 142 symmetrical with respect to the liquid injection hole 17 in the long side direction of the sealing plate 14.

In this preferred embodiment, the sealing plate 14 includes an insulating member 280 that extends along the inner surface 142. A portion of the insulating member 280 forms one protrusion 290. Similar to the insulating member 80 of the embodiment described above, the insulating member 280 in this preferred embodiment has a function of insulating between the positive electrode terminal 30 and the inner surface 142 of the sealing plate 14 and a function of insulating between the negative electrode terminal 40 and the inner surface 142 of the sealing plate 14. As illustrated in FIG. 5, the insulating member 280 arranged at the positive electrode side (see a left side in FIG. 5, and FIG. 1) includes the protrusion 290 at an end (in FIG. 5, a right end) thereof closer to the liquid injection hole 17. The insulating member 280 arranged at the negative electrode side (see a right side in FIG. 5, and FIG. 1) includes the protrusion 290 at an end (in FIG. 5, a left end) thereof closer to the liquid injection hole 17. In this preferred embodiment, the protrusions 290 are formed of an insulative material (for example, a resin material). Therefore, in addition to the effect of suppressing adhesion of the electrolyte solution to the liquid injection hole 17, an effect of reducing a risk of contact of the electrode body 20 and the sealing plate 14 can be achieved.

For the technology disclosed herein, a study example (test example) conducted by the inventor of the present application will be described below. However, the test example is not intended to limit the technology disclosed herein. Note that, for a reference number of each portion in the test example below, see FIG. 1 to FIG. 3 as appropriate.

### <Design of Evaluation Samples>

For a protrusion 90 according to this test example, samples indicated in Table 1 below were designed. However, the protrusion 90 designed in this test example was only for the protrusion 90 provided closer to the first short side portion 14c and, for the protrusion 90 provided closer to the second short side portion 14d, no sample was designed. For each of the samples, a simulation related to adhesion of the electrolyte solution to the liquid injection hole 17 was performed using a computer aided engineering (CAE) analysis. In the CAE analysis, a test assembly in which the electrode body 20 and the electrolyte solution were housed in the body 12 and the sealing plate 14 was attached to the opening 12h was conveyed leftward from the narrow width surface 12b corresponding to the first short side portion 14c, and whether the electrolyte solution adheres to the liquid injection hole 17 when a conveyance speed was reduced at a predetermined timing was evaluated. In this case, the electrolyte solution was accelerated from a resting state. The conveyance speed of the test assembly was reduced from uniform acceleration such that a same result as that of accelerating the electrolyte solution from the resting state was achieved, and an analysis was performed. The electrolyte solution then was in a resting state. Note that the conveyance speed of the test assembly in the CAE analysis was 1000 mm/s. The acceleration while the conveyance speed was reduced (that is, deceleration) was 1.2 × 9.8 m/s².

Regarding a dimensional relation of each of the samples, each of the samples was designed as follows.
·A long side length of the sealing plate 14 (an outer dimension): 120 mm (an inner dimension: 119 mm)
·A height of the body 12 (an outer dimension): 65 mm
·A height of a liquid level of the electrolyte solution (a distance from the outer surface 141 of the sealing plate 14): 8 mm
·A thickness of the protrusion 90: 0.5 mm
·A width of the protrusion 90 (a length in the short side direction of the sealing plate 14): 10.5 mm
·A distance X: As indicated in Table 1
·A distance Z: As indicated in Table 1
·An angle θ: As indicated in Table 1

Note that the "distance X" corresponds to the shortest distance W3 illustrated in FIG. 3. The "distance Z" is a distance from the inner surface 142 of the sealing plate 14 to the tip end 90E of the protrusion 90, as illustrated in FIG. 2. The "angle θ" is an angle formed by the line LS and the straight line L1, as illustrated in FIG. 2.

### <Evaluation>

Evaluation criteria for each sample are as follows.
"∘": On the inner surface 142 of the sealing plate 14, there was no adhesion of the electrolyte solution to the liquid injection hole 17 (the effect of suppressing adhesion of the electrolyte solution to the liquid injection hole 17 was achieved).
"×": On the inner surface 142 of the sealing plate 14, there was adhesion of the electrolyte solution to the liquid injection hole 17 (the effect of suppressing adhesion of the electrolyte solution to the liquid injection hole 17 was not achieved).

**Table 1**

| x (mm) | θ (degree) | z (mm) | | | | |
|---|---|---|---|---|---|---|
| | | 1 | 2 | 3 | 4 | 5 |
| 39 | 10 | ○ | ○ | ○ | ○ | ○ |
| | 20 | ○ | ○ | ○ | ○ | ○ |
| | 30 | ○ | ○ | ○ | ○ | ○ |
| | 40 | ○ | ○ | ○ | ○ | ○ |
| | 50 | ○ | ○ | ○ | × | × |
| | 60 | ○ | ○ | ○ | × | × |
| | 70 | ○ | ○ | ○ | × | × |
| | 80 | ○ | ○ | × | × | × |
| | 90 | ○ | ○ | × | × | × |
| | 100 | ○ | ○ | × | × | × |
| | 110 | ○ | ○ | × | × | × |
| | 120 | ○ | ○ | × | × | × |
| 35 | 10 | ○ | ○ | ○ | ○ | ○ |
| | 20 | ○ | ○ | ○ | ○ | ○ |
| | 30 | ○ | ○ | ○ | ○ | ○ |
| | 40 | ○ | ○ | ○ | × | × |
| | 50 | ○ | ○ | × | × | × |
| | 60 | ○ | × | × | × | × |
| | 70 | ○ | × | × | × | × |
| | 80 | ○ | × | × | × | × |
| | 90 | ○ | × | × | × | × |
| | 100 | ○ | × | × | × | × |
| | 110 | ○ | × | × | × | × |
| | 120 | ○ | × | × | × | × |
| 31 | 10 | ○ | ○ | ○ | ○ | ○ |
| | 20 | ○ | ○ | ○ | ○ | ○ |
| | 30 | ○ | ○ | × | × | × |
| | 40 | ○ | × | × | × | × |
| | 50 | × | × | × | × | × |
| | 60 | × | × | × | × | × |
| | 70 | × | × | × | × | × |
| | 80 | × | × | × | × | × |
| | 90 | × | × | × | × | × |
| | 100 | × | × | × | × | × |
| | 110 | × | × | × | × | × |
| | 120 | × | × | × | × | × |

It was found that, in a case where the protrusion 90 was provided only at a portion of the sealing plate 14 located at a side closer to the first short side portion 14c, as indicated in Table 1, there was a tendency that, the smaller the angle θ was, the better the effect of the technology disclosed herein was achieved. It was also found that there was a tendency that, the smaller the distance Z was, the better the effect of the technology disclosed herein was achieved. It was further found that there is tendency that, the closer to the liquid injection hole 17 the protrusion 90 was provided (that is, the larger the distance X was), the better the effect of the technology disclosed herein was achieved.

As described above, the following items are given as specific aspects of the technology disclosed herein.
First Item: An electricity storage device that includes an electrode body; an electrolyte solution; and a case that houses the electrode body and the electrolyte solution and includes a body including a rectangular bottom surface, an opening opposed to the bottom surface, a pair of broad width surfaces that are opposed to each other and each of which extends from a corresponding one of a pair of long sides of the bottom surface that are opposed to each other, and a pair of narrow width surfaces that are opposed to each other and each of which extends from a corresponding one of a pair of short sides of the bottom surface that are opposed to each other, and a rectangular sealing plate that seals the opening, and in which the sealing plate includes a first long side portion and a second long side portion opposed to each other, and a first short side portion and a second short side portion opposed to each other, the sealing plate includes a liquid injection hole through which the electrolyte solution is injected at a side closer to the first short side portion than a straight line passing through a middle point of the first long side portion and a middle point of the second long side portion, the sealing plate includes a pair of protrusions that protrude from an inner surface thereof opposed to the bottom surface inwardly of the case, and the pair of protrusions are provided in portions of the inner surface symmetrical with respect to the liquid injection hole in a long side direction of the sealing plate.
Second Item: The electricity storage device described in the first item, in which each of the protrusions includes a flat surface facing an opposite side to the other one of the protrusions.
Third Item: The electricity storage device described in the first or second item, in which each of the protrusions has a plate-like shape, and includes a flat first surface at a side closer to the other one of the protrusions and a flat second surface at an opposite side to the first surface.
Fourth Item: The electricity storage device described in any one of the first to third items, in which each of the protrusions is inclined relative to the inner surface of the sealing plate, and of angles formed by each of the protrusions and the inner surface, an angle at a side closer to the other one of the protrusions is less than 90 degrees.
Fifth Item: The electricity storage device described in any one of the first to fourth items, in which when it is assumed that a shortest distance between the first short side portion and the second short side portion is 1, a shortest distance from the liquid injection hole to each of the protrusions is 0.06 or more and the 0.13 or less.
Sixth Item: The electricity storage device according to any one of the first to fifth items, in which each of the protrusions is provided continuously to and integrally with the sealing plate.
Sevent Item: The electricity storage device according to any one of the first to fifth items, in which the sealing plate includes an insulating member that extends along the inner surface and a portion of the insulating member forms each of the protrusions.

Preferred embodiments of the present disclosure have been described above, but it is not intended to limit the technology disclosed herein to the preferred embodiments described above. The technology disclosed herein can be implemented in various other embodiments. The technology described in the scope of claims includes various modifications and changes of the preferred embodiments described as examples above. For example, a portion of the preferred embodiments described above can be replaced with some other modified aspect. Some other modified aspect can be added to the preferred embodiments described above. Additionally, a technical feature can be deleted as appropriate unless the technical feature is described as an essential element.

## Claims

1. An electricity storage device (1) comprising:
an electrode body (20);
an electrolyte solution; and
a case (10) that houses the electrode body (20) and the electrolyte solution and includes
a body (12) including a rectangular bottom surface (12c), an opening (12h) opposed to the bottom surface (12c), a pair of broad width surfaces (12a) that are opposed to each other and each of which extends from a corresponding one of a pair of long sides of the bottom surface (12c) that are opposed to each other, and a pair of narrow width surfaces (12b) that are opposed to each other and each of which extends from a corresponding one of a pair of short sides of the bottom surface (12c) that are opposed to each other, and
a rectangular sealing plate (14) that seals the opening(12h),
wherein
the sealing plate (14) includes
a first long side portion (14a) and a second long side portion (14b) opposed to each other, and
a first short side portion (14c) and a second short side portion (14d) opposed to each other,
the sealing plate (14) includes a liquid injection hole (17) through which the electrolyte solution is injected at a side closer to the first short side portion (14c) than a straight line (CL) passing through a middle point (M1) of the first long side portion (14a) and a middle point (M2) of the second long side portion (14b),
the sealing plate (14) includes a pair of protrusions (90, 290) that protrude from an inner surface (142) thereof opposed to the bottom surface (12c) inwardly of the case (10), and
the pair of protrusions (90, 290) are provided in portions of the inner surface (142) symmetrical with respect to the liquid injection hole (17) in a long side direction of the sealing plate (14).

2. The electricity storage device (1) according to claim 1, wherein
each of the protrusions (90, 290) includes a flat surface (92) facing an opposite side to the other one of the protrusions (90, 290).

3. The electricity storage device (1) according to claim 1, wherein
each of the protrusions (90, 290)
has a plate-like shape, and
includes a flat first surface (91) at a side closer to the other one of the protrusions (90, 290) and a flat second surface (92) at an opposite side to the first surface (91).

4. The electricity storage device (1) according to claim 1, wherein
each of the protrusions (90, 290) is inclined relative to the inner surface (142) of the sealing plate (14), and
of angles formed by each of the protrusions (90, 290) and the inner surface (142), an angle at a side closer to the other one of the protrusions (90, 290) is less than 90 degrees.

5. The electricity storage device (1) according to claim 1, wherein
when it is assumed that a shortest distance (W2) between the first short side portion (14c) and the second short side portion (14d) is 1, a shortest distance (W1) from the liquid injection hole (17) to each of the protrusions (90, 290) is 0.06 or more and the 0.13 or less.

6. The electricity storage device (1) according to any one of claims 1 to 5, wherein
each of the protrusions (90) is provided continuously to and integrally with the sealing plate (14).

7. The electricity storage device (1) according to any one of claims 1 to 5, wherein
the sealing plate (14) includes an insulating member (280) that extends along the inner surface (142) and a portion of the insulating member (280) forms each of the protrusions (290).
